# EUROPEAN PATENT APPLICATION

(11) **EP 0 870 666 A1**
(43) Date of publication of application: **14.10.1998**
(21) Application number: 97500223.9
(22) Date of filing: 23.12.1997
(51) Int. Cl.: B61F 9/00, B60B 17/00, E01B 5/02

(54) **Train with wheels and tracks improved**

(30) Priority: 09.04.1997 ES 9700750; 23.12.1997 ES 9702674
(71) Applicant: Munoz Saiz, Manuel, E-28017 Madrid (ES)
(72) Inventor: Munoz Saiz, Manuel, E-28017 Madrid (ES)

(57) **Abstract**

A train with wheels an tracks improved characterised by using pulley wheels on which the bottom of the pulley throat is of a cross-section slightly less than a semi-circunference, the rail head being aproximately semi-circular in cross-section and of slightly less radius, forming the rail a roughly semi-circular cross-section channel between the web and skid, in which inclined wheels rest which have a peripheral or edge curvature also of semi-circular cross-section.

## Description

FIELD OF THE INVENTION.- Rail transport.

STATE OF THE PRIOR ART.- At present trains must be very heavy in order to remain in permanent contact with the track and avoid derailment, making them slower, consuming more power, and making them less ecological. Existing trains also have little coupling or lateral stability on the rail because of the imperfect contact between wheel and rail.

DESCRIPTION OF THE INVENTION.- The train with wheels and tracks improved in this invention is characterised by using pulley wheels on which the bottom of the pulley throat is of a cross-section slightly less than a semi-circunference, the rail head being aproximately semi-circular in cross-section and of slightly less radius, allowing for a small lateral rotation between the two.

The curvature of the pulley wheel throat and/or of the rail core are convex to some degree to prevent a large surface contact between the two. Wheel-rail contact is better than with standard trains wheels, avoiding or reducing jerking, cutting wear and making wear more even.

The rail heads and webs and the wheels are arranged vertically, though they may be inclined.

The rail may form a roughly semi-circular cross-section channel between the web and skid on one or on both sides, in which inclined wheels rest which have a peripheral or edge curvature also of semi-circular cross-section. This is applicable both to the conventional rail and to the type with circular, semi-circular or oval cross-section head, and equally to vertical and to inclined rails. This enables the rails to be used with mixed type wheels simultaneously or with wheels of just one type, depending on the vehicle used. Inclined wheels may be metal or rubber, in the latter case the system may be useful for vehicles which are also able to run on roads.

The shock absorbing system can also be designed using plates extending the supports of the shaft and bearing assemblies, which are completely covered in rubber, also with chambers which are attached or form part of the wagon chassis. This is particularly useful for railways where, in the absence of potholing, very little shock absorbing is requiered.

It can use inclined rails whose head or upper cross-section is circular, semicircular, or rectangular in form; the wagons are supported on them by means of inclined pulley wheels which are grooved on their outside edge or central zone.

Said round or semi-circular rail uses wheels with curved or semicircular groving while the rectangular rail uses wheels of trapezium isoscels cross-section open on the larger or external surface.

The head or upper section of said rail is connected to a web, member beam or support which may or may not be inclined; on the side of the base, there are flanges for securing to the sleepers. The rails may be inclined toward the inside or outside of the track.

Said wheels may be formed by two or more components or wheels, each supported on its bearing and whose assembly form the pulley wheel.

In some cases the wheels run on the rails in such a way that they and, therefore, the wagons remain secure, allowing them to run only longitudinally, and avoiding derailment.

This system can also be used for underground trains.

The hanging, shock-absorber, breaking, traction, and other elements are as in conventional systems.

### Adventages:

Absence of jerking, very little lateral shock-absorption is required and high speeds are possible, can avoid derailment, very lightweight, permits high speeds and uses only small amounts of energy, making it more ecological. It is simple and economical.

### BRIEF DESCRIPTION OF THE DRAWINGS

Figure 1 shows a partial cross-section view of the train in the invention.

Figures 2 and 3 show two partial cross-section views of two ways of contact between the rail and the wheels.

Figures 4 to 6 show partial cross-section views of different ways of contacts between the rails and the wheels, inclined wheels are added to hold the rail laterally.

Figure 7 shows a front partial cross-section view of a variant of train.

Figure 8 shows a cross-section view of a variant of rail and its wheels.

Figure 9 shows a partial cross-section view of a variant of the rail whose head or upper section is semi-circular and its characteristic pulley wheel.

Figure 10 shows a front cross-section view of a variant of rail whose head or upper section is rectangular and its characteristic pulley wheel.

Figure 11 shows a cross-section view of a grooved wheel by three independent pieces or wheels.

Figure 12 shows a partial cross-section view of a variant using three wheels at right angles to the surface of the rail.

### MORE DETAIL DESCRIPTION OF THE DRAWINGS

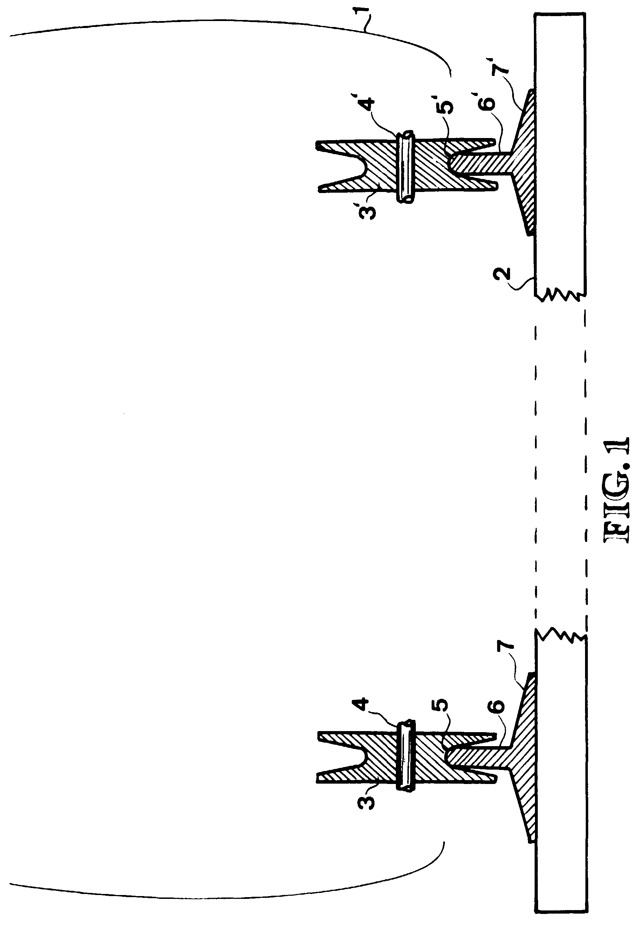

Figure 1 consists of the wagon 1, the sleeper 2, the pulley wheels 3 and 3', the shafts 4 and 4 ', the cylindrical heads 5 and 5', the webs 6 and 6' and the skids 7 and 7'. The pulley wheels and the webs are of the vertical type.

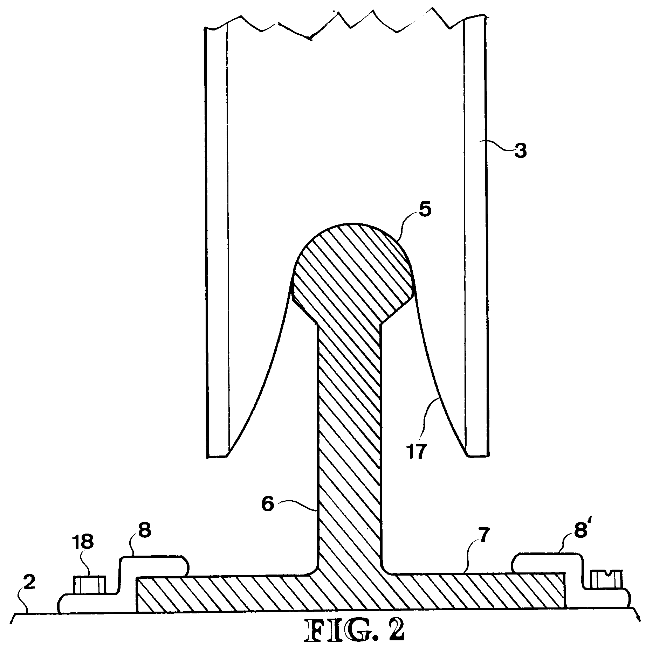

Figure 2 consists of the sleeper 2, the pulley wheel 3, the semi-circular cross-section head 5, wider than the web 6, the skid 7, the convex curvature of the pulley wheel throat 17, the fixing springs 8 and 8', and the screw or bolt 18.

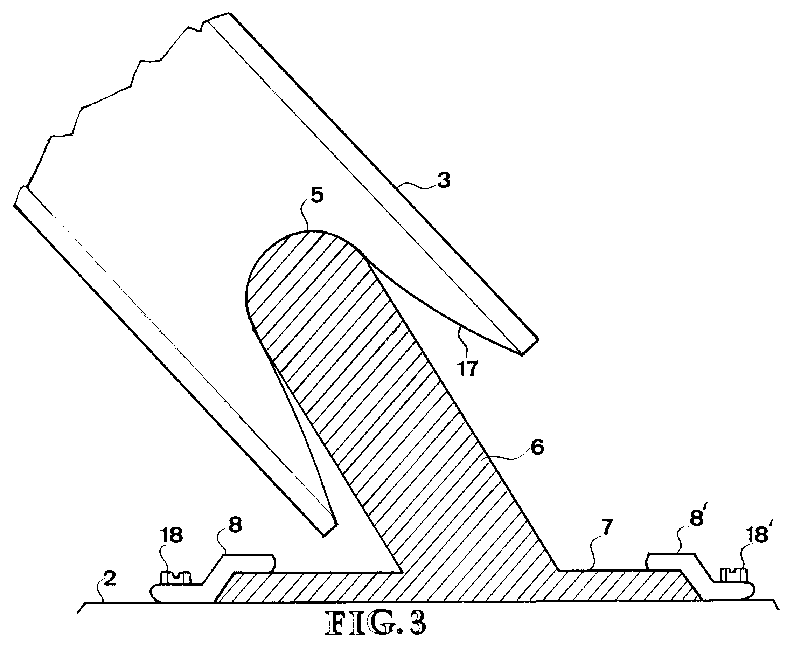

Figure 3 consists of the sleeper 2, the pulley wheel 3, the semi-circular cross-section head 5 of the same wide than the web 6, the skid 7, the convex curvature of the pulley wheel throat 17, the fixing springs 8 and 8', and the screws or bolts 18 and 18'. This is of the inclined wheel, head and web type.

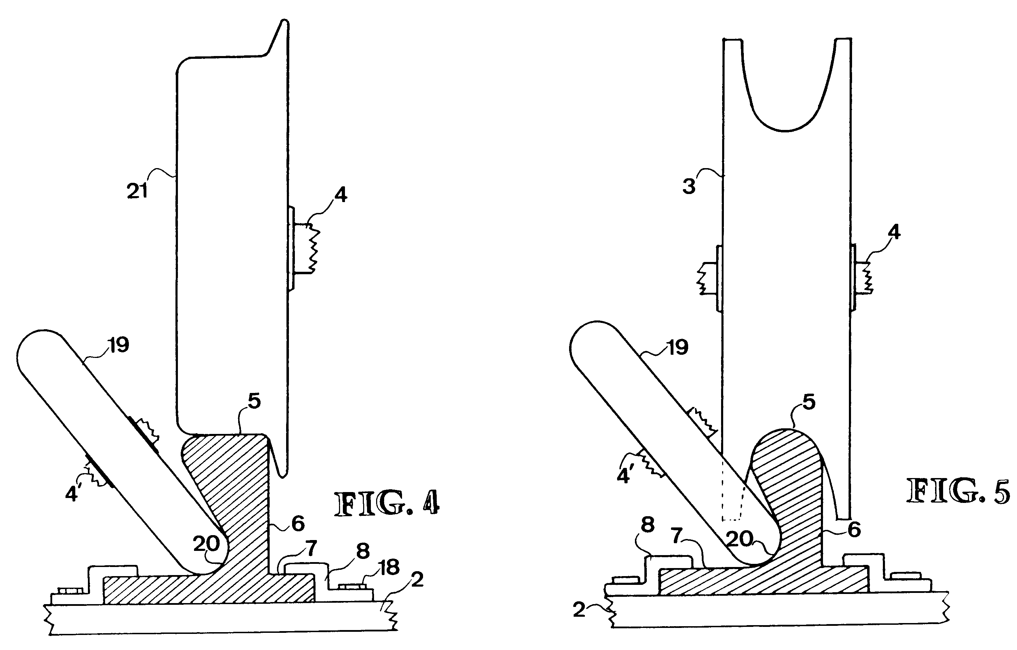

Figure 4 consists of the sleeper 2, the conventional wheel 21 and its shaft 4, the head 5, the web 6, the skid 7, the fixing spring 8, the screw 18, the inclined wheel which have a peripheral or edge curvature of semi-circular cross-section to hold the rail laterally 19, its shaft 4' and the semi-circular cross-section channel 20.

Figure 5 consists of the sleeper 2, the pulley wheel 3 and its shaft 4, the head 5, the web 6, the skid 7, the fixing spring 8, the inclined wheel which have a peripheral or edge curvature of semi-circular cross-section to hold the rail laterally 19, its shaft 4' and the semi-circular cross-section channel 20.

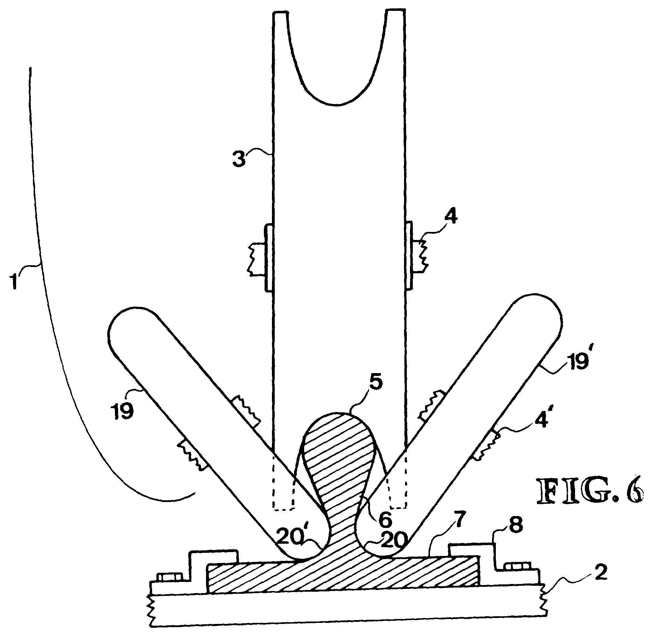

Figure 6 consists of the sleeper 2, the pulley wheel 3 and its shaft 4, the head 5, the web 6, the skid 7, the fixing spring 8, the inclined wheels which have a peripheral or edge curvature of semi-circular cross-section to hold the rail laterally 19 and 19', its shaft 4' and the semi-circular cross-section channels 20 and 20' one at each side.

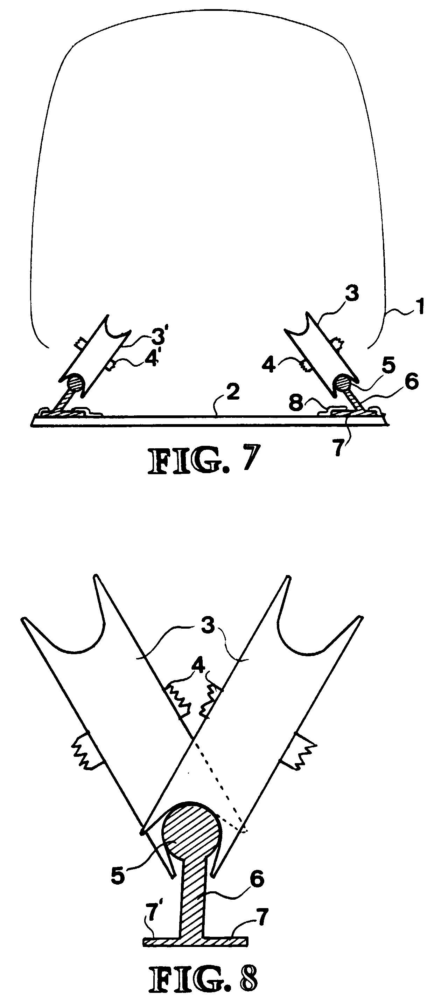

Figure 7 consists of the vagon 1, the sleeper 2, the pulley wheels 3 and 3', the shafts 4 and 4', the cylindrical head 5, the web, beam or support 6, the skid 7 and the fixing spring 8.

Figure 8 consists of the pulley wheels 3, the rotating shafts 4, the cylindrical head 5, the web beam or support 6, and the flangs or skids 7 and 7'. Two inclined pulleys wheels are used one at each side

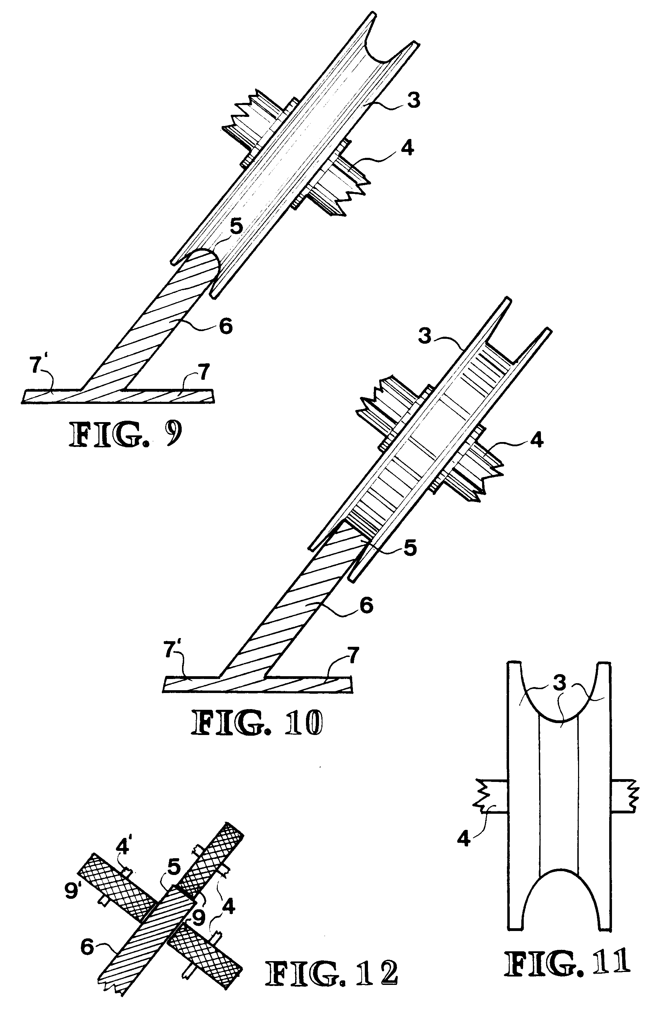

Figure 9 consists of the pulley wheel 3, the shaft 4, the semi-cylindrical head 5, the web, beam or support 6 and the flanges or skids 7 and 7'.

figure 10 consists of the wheel 3, the shaft 4, the rectangular head 5, the web, beam or support 6 and the flanges or skids 7 and 7'.

Figure 11 consists of the independent wheels 3, the assembly of said wheels form the pulley wheel, and its shaft 4.

Figure 12 consists of the shafts 4 and 4', the rectangular head 5, the web, beam or support 6 and the perpendicular and independent wheels 9 and 9'.

The rails shown in figures 4 to 6 enable the wheels to be used together or separately.

Inclined main and secondary wheels avoid derailment.

## Claims

1. A train with wheels an tracks improved characterised by using pulley wheels on which the bottom of the pulley throat is of a cross-section slightly less than a semi-circunference, the rail head being aproximately semi-circular in cross-section and of slightly less radius.

2. A train with wheels and tracks improved as set forth in claim 1, wherein the curvature of the pulley wheel throat and of the rail core are laterally convex to some degree.

3. A train with wheels and tracks as set forth in claim 1, wherein the rail heads, webs and wheels are arranged vertically.

4. A train with wheels and track improved as set forth in claim 1, wherein the rail heads, webs and wheels are arranged obliquely toward the inside of the track.

5. A train with wheels and tracks improved as set forth in claim 1, wherein the rail heads, webs and wheels are arranged obliquely toward the outside of the track.

6. A train with wheels and tracks improved as set forth in claim 1, wherein the rail forms a roughly semi-circular cross-section channel between the web and skid, in which inclined wheels rest, which have a peripheral or edge curvature also of semi-circular cross-section.

7. A train with wheels and tracks improved as set forth in claim 1, wherein the rail of conventional type, forms a roughly semi-circular cross-section channel between the web and skid, in which inclined wheels rest which have a peripheral or edge curvature also of semi-circular cross-section.

8. A train with wheels and tracks improved as set forth in claim 1, wherein the wheels are formed by two or more components or wheels, each supported on its bearing and whose assembly form the pulley wheel.

9. A train with wheels and tracks improved as set forth in claim 1, wherein are used rails whose head cross-section are circular, the vagons are supported on them by means of inclined pulley wheels which are grooved on their outside edge or central zone.

10. A train with wheels and tracks improved as set forth in claim 1, wherein are used three wheels at right angles to the three faces or surfaces of the rail.
